# EUROPÄISCHE PATENTSCHRIFT

(11) **EP 3 145 619 B1**
(45) Veröffentlichungstag und Bekanntmachung des Hinweises auf die Patenterteilung: **19.12.2018**
(21) Anmeldenummer: 15723964.1
(22) Anmeldetag: 21.05.2015
(51) Int. Cl.: B01D 46/52, B01D 29/21

(54) **FILTEREINSATZTEIL MIT EINEM GEFALTETEN FILTERELEMENT**
FILTER INSERT PIECE COMPRISING A PLEATED FILTER ELEMENT
COMPOSANT DE CARTOUCHE FILTRANTE COMPORTANT UN ÉLÉMENT FILTRANT PLIÉ

(30) Priorität: 21.05.2014 DE 102014007372
(43) Veröffentlichungstag der Anmeldung: 29.03.2017
(73) Patentinhaber: Mann+Hummel GmbH, 71636 Ludwigsburg (DE)
(72) Erfinder: KLEIN, Martin, 95447 Bayreuth (DE); BARTEL, Frank, 84130 Dingolfing (DE); EISENGRÄBER-PABST, Jobst, 71720 Oberstenfeld-Gronau (DE); KREINER, Anton, 94419 Reisbach (DE); GOHL, Pamela, 71686 Remseck (DE); SPELTER, Lars, 71254 Ditzingen (DE); LABARTA, Armando, 71638 Ludwigsburg (DE)
(74) Vertreter: Seyboth, Matthias
(86) Internationale Anmeldenummer: PCT/EP2015/061263
(87) Internationale Veröffentlichungsnummer: WO 2015/177282

(56) Entgegenhaltungen:
- DE-A1-102011 083 657
- US-A1- 2007 157 589

## Beschreibung

### Technisches Gebiet

Die Erfindung bezieht sich auf ein Filtereinsatzteil mit einem gefalteten Filterelement nach dem Oberbegriff des Anspruches 1.

### Stand der Technik

In der EP 0 973 597 B1 wird ein Filtereinsatzteil beschrieben, das zur Fluidfiltration ein Filterelement umfasst, welches eine tannenbaumartige Struktur aufweist. Das Filterelement ist aus zwei Hälften zusammengesetzt und schließt einen Reinraum ein. Die beiden Hälften werden jeweils von außen nach innen angeströmt, wobei das gereinigte Fluid im innenliegenden Reinraum gesammelt und aus diesem abgeleitet wird.

Aus der US 5 043 000 A ist ein Luftfilterelement bekannt, das zylindrisch ausgebildet ist und aus mehreren über den Umfang verteilten Filtersegmenten besteht, die jeweils als Faltenfilter mit parallel angeordneten Falten ausgeführt sind. Im Inneren des Filterelementes befindet sich ein axial verlaufender Reinraum für sämtliche Filtersegmente, aus dem das gereinigte Fluid axial abgeführt wird.

Aus der DE 10 2011 083 657 A1 ist ein Filterelement bekannt, das über zwei Endscheiben verfügt, zwischen denen zwei Balgabschnitte vorliegen. Die Balgabschnitte sind spiegelsymmetrisch zueinander angeordnet und weisen jeweils eine kontinuierlich abnehmende Faltenhöhe auf.

Ferner ist aus der US 2007/0157589 A1 ein Filterelement bekannt, das ebenfalls über zwei spiegelsymmetrisch zwischen zwei Endscheiben angeordnete Balgabschnitte verfügt, die jeweils derart variable Faltenhöhen aufweisen, sodass sich eine im Wesentlichen kreisförmige Außenkontur ergibt.

### Offenbarung der Erfindung

Der Erfindung liegt die Aufgabe zugrunde, ein Filtereinsatzteil mit einem gefalteten Filterelement mit einfachen konstruktiven Maßnahmen so auszubilden, dass eine hohe Filtrationsleistung gegeben ist.

Diese Aufgabe wird erfindungsgemäß mit den Merkmalen des Anspruches 1 gelöst. Die Unteransprüche geben zweckmäßige Weiterbildung an.

Das erfindungsgemäße Filtereinsatzteil kann in ein Filtergehäuse einer Filtereinrichtung eingesetzt werden. Das Filtereinsatzteil kann zur Filtration von Flüssigkeit, insbesondere Kraftstoff verwendet werden. Im Prinzip kommt aber auch eine Anwendung zur Filtration gasförmiger Fluide in Betracht, beispielsweise für die Verbrennungsluft von Brennkraftmaschinen oder für die Luft, welche Kabinen zugeführt wird, beispielsweise in Fahrzeuginnenräumen.

Das Filtereinsatzteil weist ein gefaltetes Filterelement mit mindestens einem ersten und einem zweiten Faltenabschnitt auf, wobei die Falten innerhalb eines Faltenabschnittes parallel oder zumindest annähernd parallel zueinander angeordnet sind. Die Faltenabschnitte werden an ihrer Außenseite von dem zu reinigenden Fluid angeströmt; dementsprechend bildet ihre Außenseite die Anström- bzw. Rohseite. An der innenliegenden Abström- bzw. Reinseite befindet sich ein gemeinsamer Reinraum für alle Faltenabschnitte. Die Abströmseite jedes Faltenabschnittes ist geradflächig ausgeführt, dementsprechend weist auch der Reinraum zu jedem Faltenabschnitt hin eine geradflächige Wandung auf.

Desweiteren ist vorgesehen, dass die Länge der Falten in jedem Faltenabschnitt so ausgebildet ist, dass der Abstand zwischen der außenliegenden Faltenstirnseite an der Anströmseite zu einer Mittelachse des Filterelements von Falte zu Falte monoton ansteigt. Somit weisen die randseitigen Falten eines Faltenabschnittes eine unterschiedlich große Erstreckung zwischen der außenliegenden Faltenstirnseite und der Mittelachse des Filterelementes auf.

Diese Ausführung hat verschiedene Vorteile. Es ist insbesondere eine hohe Packungsdichte der Falten im Filterelement möglich, so dass auch bei einem begrenzten Bauraum eine hohe Filtrationsleistung gegeben ist. Die Außenseite jedes Faltenabschnittes weist aufgrund der unterschiedlichen Länge der Falten eine Krümmung auf und kann hiermit an unterschiedliche Einbausituationen flexibel angepasst werden. Die Krümmung ist so gewählt, dass mindestens zwei, üblicherweise mehrere unterschiedliche Faltenlängen innerhalb eines Faltenabschnittes gegeben sind, wobei die Faltenlänge sich zwischen den beiden äußeren, randseitigen Falten eines Faltenabschnittes in monotoner Weise ändert, also entweder ansteigt oder abfällt. Monoton ansteigend bedeutet, das ausgehend von einer randseitigen Falte sämtliche darauf folgenden Falten mindestens die gleiche oder eine größere Länge besitzen, bei monoton abfallender Steigung reduziert sich die Länge bzw. bleibt gleich. Hierbei kann es auch vorteilhaft sein, dass der Abstand zwischen der Faltenstirnseite an der Anströmseite zur Mittelachse des Filterelementes von Falte zu Falte streng monoton ansteigt, so dass sich der Abstand von Falte zu Falte kontinuierlich ändert und ausschließlich ansteigt bzw. - in Gegenrichtung gesehen - ausschließlich abfällt, wobei ein gleichbleibender Abstand ausgeschlossen ist.

Das Filterelement kann einen kreisförmigen oder teilkreisförmigen Grundquerschnitt aufweisen. Die Grundaußenseite ist in dieser Ausführungsvariante kreis- bzw. teilkreisförmig ausgebildet. In Betracht kommen aber auch sonstige gekrümmte Außenflächen, beispielsweise mit ovalem bzw. teilovalem Grundquerschnitt.

Das Filterelement kann symmetrisch, insbesondere spiegelsymmetrisch ausgebildet sein. Im letztgenannten Fall sind die Faltenabschnitte des Filterelementes spiegelsymmetrisch zu einer Mittelebene ausgebildet, welche die Mittelachse umfasst. Auf der gegenüberliegenden Seite der Mittelachse befindet sich die gleiche Anzahl an Faltenabschnitten, wobei vorzugsweise insgesamt zwei Faltenabschnitte vorhanden sind, gegebenenfalls aber auch eine größere Anzahl an Faltenabschnitten im Filterelement enthalten sein kann.

Bei spiegelsymmetrischer Ausführung kommt in einer nicht erfindungsgemäßen Ausbildung in Betracht, dass die Falten der gegenüberliegenden Faltenabschnitte parallel zueinander verlaufen können, also orthogonal zur Mittelachse bzw. -ebene. Erfindungsgemäß ist vorgesehen, dass die Falten der gegenüberliegenden Faltenabschnitte eine winklige Anordnung gegenüber der Mittelachse bzw. -ebene haben, wobei der Winkel in einem Winkelbereich größer 0° und kleiner 90° liegt.

Der Reinraum, den sich sämtliche Faltenabschnitte teilen und der im Innern des Filterelementes verläuft, ist vorzugsweise randseitig umschlossen ausgebildet und somit ringsum vom Material des Filterelementes umgeben. Der Grundquerschnitt des Reinraums ist vorzugsweise eckig, beispielsweise rechteckig, dreieckig oder trapezförmig, wobei die Seitenflächen des Reinraums in sich eben ausgebildet sind. Die Ableitung des im Reinraum gesammelten, gereinigten Fluids erfolgt orthogonal zur Mittelachse durch den Reinraum.

Gemäß einer weiteren vorteilhaften Ausführung ist in den Reinraum ein Stützgerüst eingesetzt, welches zur Stabilisierung des Filterelementes dient. Das Stützgerüst besteht vorzugsweise aus Kunststoff und weist im Bereich der Reinraumseitenflächen, welche mit der Abströmseite jedes Faltenabschnittes zusammenfallen, Durchströmungsöffnungen auf, über die das Reinfluid in den Reinraum einströmen kann. Es kann zweckmäßig sein, dass das Stützgerüst an mindestens einer Stirnseite, vorzugweise an beiden gegenüberliegenden Stirnseiten, welche sich zwischen den Abströmseiten der Faltenabschnitte erstrecken, strömungsdicht ausgeführt sind. Hierdurch ist gewährleistet, dass das Fluid nicht über die Stirnseiten des Reinraums abgeleitet wird, sondern in Orthogonalrichtung.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in Explosionsdarstellung ein Filtereinsatzteil mit einem gefalteten Filterelement, das zwei Faltenabschnitte aufweist,
- Fig. 2: in perspektivischer Ansicht das Filtereinsatzteil,
- Fig. 3: eine Draufsicht auf das Filterelement des Filtereinsatzteils gemäß Figur 1 und 2,
- Fig. 4 und 5: den Figuren 2 und 3 entsprechende Darstellungen, jedoch mit einem gefalteten Filterelement mit enger gepackten Falten,
- Fig. 6: in einer Ausführungsvariante ein Filterelement, dessen eine Außenseite geradflächig ausgeführt ist (nicht erfindungsgemäß),
- Fig. 7: das Filterelement gemäß Figur 6 mit einem in einen innenliegenden Reinraum einzusetzende Stützengerüst (nicht erfindungsgemäß),
- Fig. 8: das Filterelement gemäß Figur 6 und 7 in Draufsicht (nicht erfindungsgemäß),
- Fig. 9 bis 11: den Figuren 6 bis 8 entsprechende Darstellungen mit einem Filterelement in modifizierter Ausführung, bei dem der innenliegende Reinraum Dreiecksform aufweist (nicht erfindungsgemäß).

In den Figuren sind gleiche Bauteile mit gleichen Bezugszeichen versehen.

### Ausführungsform(en) der Erfindung

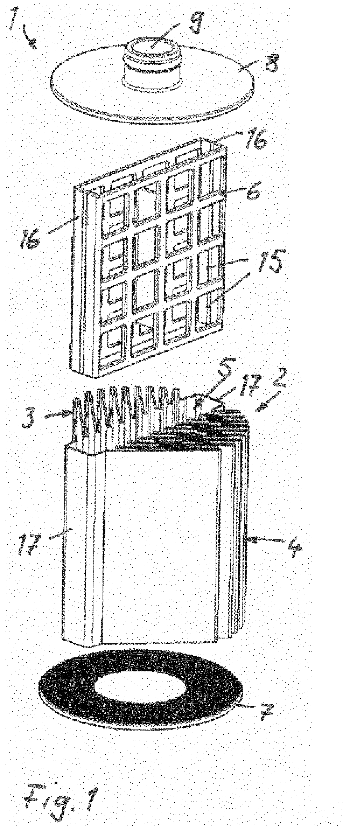

Das Ausführungsbeispiel gemäß den Figuren 1 bis 3 zeigt ein Filtereinsatzteil 1, das in ein Filtergehäuse einer Filtereinrichtung einsetzbar ist. Das Filtereinsatzteil 1 wird beispielsweise zur Filtration von Flüssigkeiten, insbesondere von Kraftstoff eingesetzt.

Das Filtereinsatzteil 1 umfasst ein als Faltenbalg ausgeführtes Filterelement 2, welches radial von außen nach innen von dem zu reinigenden Fluid durchströmt wird und aus zwei gegenüberliegend angeordneten Faltenabschnitten 3 und 4 besteht, die sich einen gemeinsamen, innenliegenden Reinraum 5 teilen. Dem Filtereinsatzteil 1 ist außerdem ein Stützgerüst 6 zugeordnet, das in den Reinraum 5 einsetzbar ist, sowie axial stirnseitig mit dem Filterelement 2 zu verbindende Endscheiben 7 und 8, wobei in eine Endscheibe 8 ein Abströmstutzen mit einer Abströmöffnung 9 eingebracht ist, über die das gereinigte Fluid aus dem Reinraum 5 abgeleitet werden kann. Die Endscheiben 7 und 8 werden strömungsdicht mit den axialen Stirnseiten des Filterelementes 2 verbunden, beispielsweise durch Kleben oder Verschweißen.

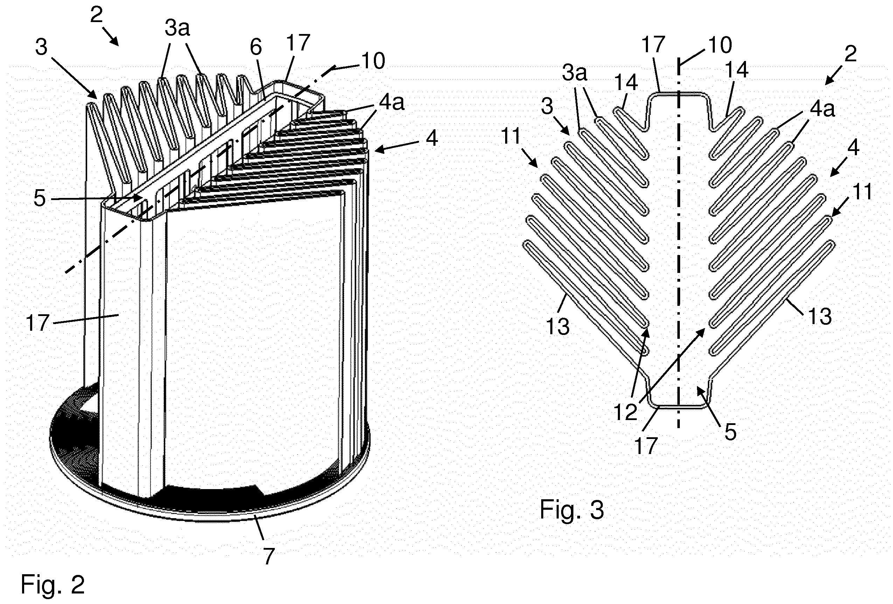

Die beiden Faltenabschnitte 3 und 4 weisen eine Mehrzahl zueinander zumindest annähernd parallel stehender Falten auf und sind bezüglich einer Mittelachse bzw. -ebene 10 (Figur 2, 3) spiegelsymmetrisch zueinander angeordnet. Die Falten jedes Faltenabschnittes 3, 4 nehmen mit der Mittelachse bzw. -ebene 10 einen Winkel von annähernd 45° ein. Die Außenseite jedes Faltenabschnittes 3, 4 bildet die Anströmseite 11, die Abströmseite 12 befindet sich entsprechend innenliegend und begrenzt den Reinraum 5, dessen Seitenwände mit den Abströmseiten 12 jedes Faltenabschnittes 3, 4 zusammenfallen. Die Anströmseite 11, welche die Rohseite bildet, weist einen konvex gekrümmten Verlauf auf, wohin gegen die Abströmseite 12, die die reine Seite bildet, geradflächig ausgebildet ist. Der Reinraum 5 liegt an der Abströmseite 12 beider Faltenabschnitte 3, 4.

Die Falten jedes Faltenabschnittes 3, 4 weisen eine sich entlang der Mittelachse 10 ändernde Länge auf. Es ist insbesondere der Abstand zwischen den außenliegenden Faltenstirnseiten bzw. -kanten 3a, 4a jeder Falte und der Mittelachse bzw. -ebene 10 unterschiedliche groß ausgeführt. Bei der Mehrzahl der Falten jedes Faltenabschnittes 3, 4 ändert sich dieser Abstand von Falte zu Falte, wobei gegebenenfalls auch Falten mit gleichem Abstand zwischen unmittelbar benachbarten Falten möglich sind. Dieses führt dazu, das ausgehend von einer ersten randseitigen Falte 13 zur gegenüberliegenden, zweiten randseitigen Falte 14 in jedem Faltenabschnitt 3 bzw. 4 sich der Abstand zwischen der Faltenstirnseite 3a, 4a und der Mittelachse bzw. -ebene 10 monoton ändert. Die Randfalte 13 weist gemeinsam mit der unmittelbar benachbarten Falte die größte Länge auf, die weiteren Falten besitzen eine kürzere Länge, wobei die gegenüberliegende Randfalte 14 die geringste Länge aufweist. Die Falten sind so dimensioniert, dass sich an der Anströmseite 11 eine konvexe Filterform ergibt.

Der Reinraum 5 weist einen rechteckförmigen Grundquerschnitt auf, dessen Längsseiten jeweils von der Abströmseite 12 der Faltenabschnitte 3 und 4 gebildet sind. Das Stützgerüst 6 ist dementsprechend, wie Figur 1 zu entnehmen, quaderförmig ausgebildet, wobei die Seitenwände des Stützgerüstes 6 mit Strömungsöffnungen 15 versehen sind, über die das Fluid von der Abströmseite 12 jedes Faltenabschnittes 3, 4 in den Reinraum 5 einströmen kann. Die beiden gegenüberliegenden Stirnseiten 16 des Stützgerüstes 6, welche die Schmalseiten bilden, weisen dagegen keine Strömungsöffnungen auf, sie sind vielmehr durchgehend bzw. strömungsdicht ausgeführt. Im eingesetzten Zustand grenzen die Stirnseiten 16 des Stützgerüstes 6 an jeweils einen Filterabschnitt 17 des Filterelementes 2, der die beiden Faltenabschnitte 3 und 4 miteinander verbindet. Die Ableitung erfolgt vielmehr orthogonal zur Mittelachse 10 sowie orthogonal zur Durchströmungsrichtung der Faltenabschnitte 3, 4 über die in der oberen Endscheibe 8 angeordnete Abströmöffnung 9.

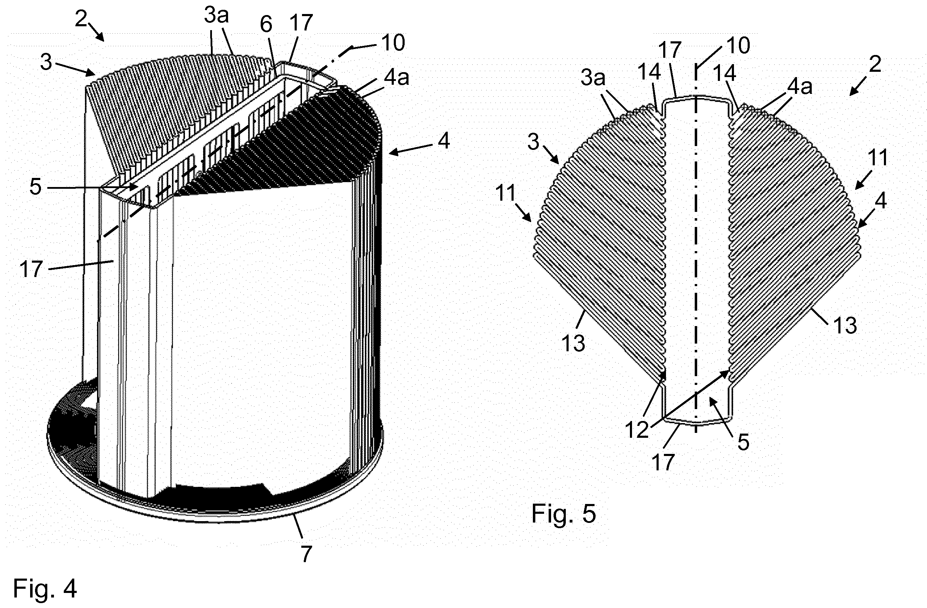

Das Ausführungsbeispiel gemäß den Figuren 4 und 5 entspricht der Darstellung des ersten Ausführungsbeispieles gemäß Figur 2 und 3. Im ersten Ausführungsbeispiel liegen die Falten der Faltenabschnitte 3 und 4 annähernd parallel, jedoch mit geringem Abstand zueinander. Beim zweiten Ausführungsbeispiel gemäß Figur 4 und 5 sind die Falten in jedem Faltenabschnitt 3, 4 ebenfalls parallel zueinander ausgerichtet, sie liegen jedoch unmittelbar aneinander und berühren sich, wodurch eine höhere Faltenpackungsdichte erreicht wird.

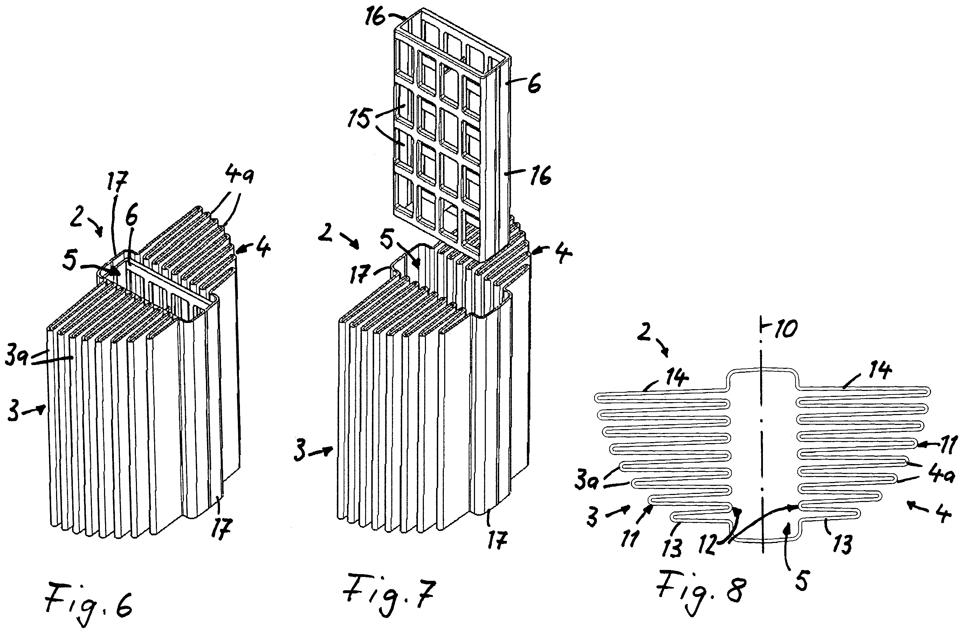

In den Figuren 6 bis 8 ist ein weiteres Ausführungsbeispiel eines Filterelementes 2 dargestellt, welches als Faltenfilter ausgebildet ist und spiegelsymmetrisch zur Mittellängsachse bzw. -ebene zwei Faltenabschnitte 3 und 4 aufweist, deren Falten bezogen auf die Mittellängsachse 10 eine unterschiedliche Länge aufweisen. Die Abströmseite 12, welche den Reinraum 5 begrenzt, liegt auch in diesem Ausführungsbeispiel für alle Falten eines Faltenabschnittes 3 bzw. 4 in einer gemeinsamen Ebene. Die Anströmseite 11 mit den Faltenstirnseiten 3a bzw. 4a jedes Faltenabschnittes 3 bzw. 4 weist dagegen einen konvex gekrümmten Verlauf auf, welcher dadurch zustande kommt, dass die Länge der Falten beginnend bei einer Randfalte 13 und sich erstreckend zur gegenüberliegenden Randfalte 14 kontinuierlich, also streng monoton zunimmt.

Der Reinraum 5 ist wie bei den vorherigen Ausführungsbeispielen mit einem rechteckförmigen Grundquerschnitt ausgeführt, dementsprechend ist das in den Reinraum 5 eingesetzte Stützgerüst 6 quaderförmig ausgebildet. Die seitlichen Wandungen des Stützgerüstes 6, welche unmittelbar an den Abströmseiten 12 der Faltenabschnitte 3 bzw. 4 anliegen, sind mit Strömungsöffnungen 15 versehen, wohingegen die Stirnseiten 16, welche die Schmalseiten des Stützgerüstes 6 bilden, durchgehend und damit strömungsdicht ausgeführt sind. Die Stirnseiten 16 des Stützgerüstes 6 werden im eingesetzten Zustand von den Filterabschnitten 17 des Filterelementes 2 übergriffen, wobei die Filterabschnitte 17 die beiden Faltenabschnitte 3 und 4 miteinander verbinden.

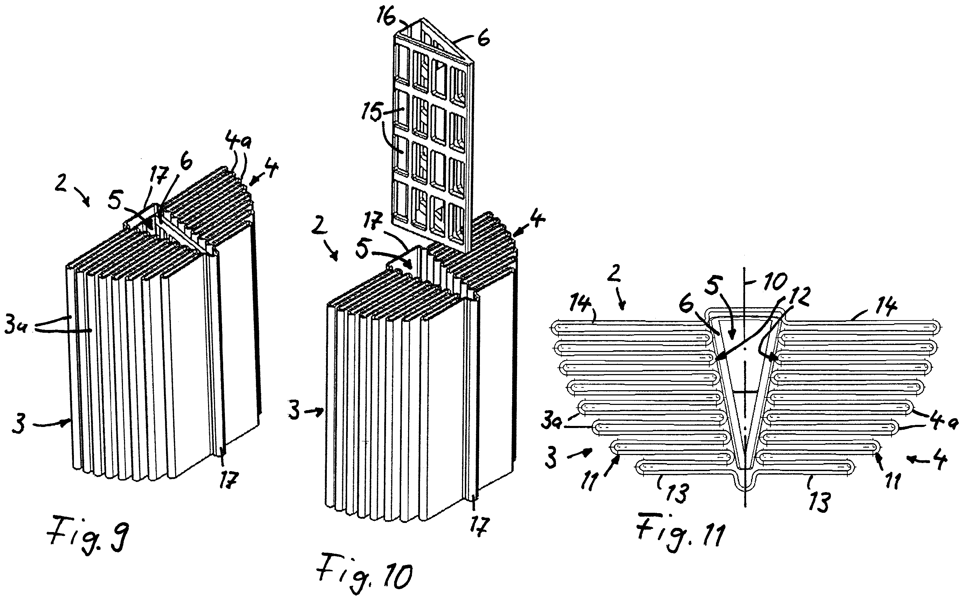

Im Ausführungsbeispiel gemäß den Figuren 9 bis 11 ist das Filterelement 2 ebenfalls mit zwei spiegelsymmetrisch zur Mittelachse bzw. -ebene 10 ausgebildeten Faltenabschnitten 3 und 4 ausgeführt, wobei die Falten der Faltenabschnitte 3 und 4 zueinander parallel und orthogonal zur Mittelachse 10 verlaufen.

Der Reinraum 5 weist einen dreiecksförmigen Grundquerschnitt mit Schenkeln gleicher Länge auf, welche an den Abström- bzw. Reinseiten 12 der Faltenabschnitte 3 und 4 anliegen, die geradflächig ausgebildet sind. Die Anström- bzw. Rohseite 11 jedes Faltenabschnittes 3 bzw. 4 ist dagegen wie beim Ausführungsbeispiel gemäß Figuren 6 bis 8 konvex gekrümmt ausgeführt, wobei die Länge der Falten jeden Faltenabschnitts ausgehend von einer Randfalte 13 zur gegenüberliegenden Randfalte 14 kontinuierlich und damit streng monoton zunimmt.

Bei den Ausführungsbeispielen gemäß den Fig. 6 bis 8 sowie den Fig. 9 bis 11 weist das Filterelement 2 einen Grundquerschnitt mit einer geradflächigen Außenseite auf, die von den längeren Randfalten 14 der beiden Faltenabschnitte 3, 4 gebildet wird. Auf der diametral gegenüberliegenden Seite ist ebenfalls eine geradflächige Außenseite gegeben, die von den kürzeren Randfalten 13 der beiden Faltenabschnitte 3, 4 gebildet wird.

## Patentansprüche

1. Filtereinsatzteil mit einem gefalteten Filterelement (2), mit einem ersten Faltenabschnitt (3) mit parallel angeordneten Falten und einem zweiten Faltenabschnitt (4) mit parallel angeordneten Falten, wobei der erste und der zweite Faltenabschnitt (3, 4) unterschiedliche Anströmseiten (11) im Filterelement (2) aufweisen und die Faltenabschnitte (3, 4) an einen gemeinsamen Reinraum (5) angrenzen, die an den Reinraum (5) angrenzende Abströmseite (12) jedes Faltenabschnitts (3, 4) geradflächig ausgeführt ist und die Länge der Falten jedes Faltenabschnitts (3, 4) in der Weise ausgebildet ist, dass der Abstand zwischen der außenliegenden Faltenstirnseite (3a, 4a) an der Anströmseite (11) zu einer Mittelebene (10) des Filterelements (2) von Falte zu Falte monoton ansteigt oder von Falte zu Falte monoton abfällt, so dass die randseitigen Falten (13, 14) eines Faltenabschnitts (3, 4) eine unterschiedlich große Erstreckung zwischen der außenliegenden Faltenstirnseite (3a, 4a) und der Mittelachse (10) aufweisen, **dadurch gekennzeichnet, dass** die Falten der Faltenabschnitte (3, 4) gegenüber der Mittelebene (10) einen Winkel größer als 0° und kleiner als 90° einnehmen.

2. Filtereinsatzteil nach Anspruch 1, **dadurch gekennzeichnet, dass** der Abstand zwischen der Faltenstirnseite (3a, 4a) an der Anströmseite (11) zur Mittelachse (10) des Filterelements (2) von Falte zu Falte streng monoton ansteigt oder von Falte zu Falte streng monoton abfällt.

3. Filtereinsatzteil nach Anspruch 1 oder 2, **dadurch gekennzeichnet, dass** das Filterelement (2) spiegelsymmetrisch zu einer Mittelebene (10) ausgebildet ist.

4. Filtereinsatzteil nach einem der Ansprüche 1 bis 3, **dadurch gekennzeichnet, dass** der Reinraum (5) einen eckigen Grundquerschnitt aufweist, beispielsweise einen rechteckigen oder dreieckigen Grundquerschnitt.

5. Filtereinsatzteil nach einem der Ansprüche 1 bis 4, **dadurch gekennzeichnet, dass** ein Stützgerüst (6) in den Reinraum (5) eingesetzt ist.

6. Filtereinsatzteil nach Anspruch 5, **dadurch gekennzeichnet, dass** das Stützgerüst (6) an mindestens einer Stirnseite (16) strömungsdicht ausgeführt ist, wobei die Stirnseite (16) die Seitenwände des Stützgerüsts (6) mit darin eingebrachten Strömungsöffnungen (15) verbindet und die Seitenwände an die Abströmseite (12) der Faltenabschnitte (3, 4) angrenzen.

7. Filtereinsatzteil nach einem der Ansprüche 1 bis 6, **dadurch gekennzeichnet, dass** der Reinraum (5) von dem Filtermedium des Filterelements (2) umschlossen ist.

8. Filtereinsatzteil nach einem der Ansprüche 1 bis 7, **dadurch gekennzeichnet, dass** das Filterelement (2) einen kreis- oder teilkreisförmigen Grundquerschnitt aufweist.

## Claims

1. Filter insert with a folded filter element (2), with a first folding section (3) with folds arranged in parallel and a second folding section (4) with folds arranged in parallel, wherein the first and the second folding section (3, 4) feature different inflow sides (11) in the filter element (2) and the folding sections (3, 4) adjoin a common clean room (5), the outflow side (12) of each folding section (3, 4) adjoining the clean room (5) is designed in a two-dimensional straight plane and the length of the folds of each folding section (3, 4) is designed in such a way that the distance between the outer fold front side (3a, 4a) on the inflow side (11) and a central plane (10) of the filter element (2) increases monotonically from fold to fold or decreases monotonically from fold to fold, so that the edge folds (13, 14) of a folding section (3, 4) feature a different extension between the outer fold front side (3a, 4a) and the central axis (10), **characterized in that** the folds of the folding sections (3, 4) assume an angle greater than 0° and less than 90° with respect to the central plane (10).

2. Filter insert according to claim 1, **characterized in that** the distance between the fold front side (3a, 4a) on the inflow side (11) and the central axis (10) of the filter element (2) increases strictly monotonically from fold to fold or decreases strictly monotonically from fold to fold.

3. Filter insert according to claim 1 or 2, **characterized in that** the filter element (2) is designed mirror-symmetrically to a central plane (10).

4. Filter insert according to one of the claims 1 to 3, **characterized in that** the clean room (5) features an angular base cross section, for example a rectangular or triangular base cross section.

5. Filter insert according to one of the claims 1 to 4, **characterized in that** a support frame (6) is inserted into the clean room (5).

6. Filter insert according to claim 5, **characterized in that** the support frame (6) is flow-tight on at least one front side (16), wherein the front side (16) connects the sidewalls of the support frame (6) with flow openings (15) therein and the side walls adjoin the outflow side (12) of the folding sections (3, 4).

7. Filter insert according to one of the claims 1 to 6, **characterized in that** clean room (5) is enclosed by the filter medium of the filter element (2).

8. Filter insert according to one of the claims 1 to 7, **characterized in that** the filter element (2) features a circular or partially circular base cross section.

## Revendications

1. Cartouche filtrante avec un élément filtrant plié (2), avec une première section de plis (3) avec des plis disposés en parallèle et une deuxième section de plis (4) avec des plis disposés en parallèle, la première et la deuxième section de plis (3, 4) présentant différents côtés entrée (11) dans l'élément filtrant (2) et les sections de plis (3, 4) jouxtant un espace pur commun (5), le côté d'écoulement (12) de chaque section de plis (3, 4) jouxtant l'espace pur (5) est un plan plat en deux dimensions, et la longueur des plis de chaque section de plis (3, 4) étant formée de telle manière que la distance entre la face frontale des plis extérieures (3a, 4a) du côté entrée (11) et un plan central (10) de l'élément filtrant (2) s'élève de manière monotone de pli en pli ou diminue de pli en pli de manière monotone, de sorte que les plis de bord (13, 14) d'une section de plis (3, 4) présentent une extension différente entre la face frontale des plis extérieures (3a, 4a) et l'axe médian (10), **caractérisée en ce que** les plis des sections de plis (3, 4) prennent un angle supérieur à 0° et inférieur à 90° par rapport au plan central (10).

2. Cartouche filtrante selon la revendication 1, **caractérisée en ce que** la distance entre la face frontale de plis (3a, 4a) du côté entrée (11) et l'axe médian (10) de l'élément filtrant (2) augmente strictement monotone de pli en pli ou diminue strictement monotone de pli en pli.

3. Cartouche filtrante selon la revendication 1 ou 2, **caractérisée en ce que** l'élément filtrant (2) est conçu en symétrie spéculaire par rapport à un plan central (10).

4. Cartouche filtrante selon l'une des revendications 1 à 3, **caractérisée en ce que** l'espace pur (5) présente une section transversale de base angulaire, par exemple une section transversale de base rectangulaire ou triangulaire.

5. Cartouche filtrante selon l'une des revendications 1 à 4, **caractérisée en ce qu'**une structure d'appui (6) est insérée dans l'espace pur (5).

6. Cartouche filtrante selon la revendication 5, **caractérisée en ce que** la structure d'appui (6) est étanche au flux sur au moins une face frontale (16), la face frontale (16) reliant les parois latérales de la structure d'appui (6) avec des ouvertures d'écoulement (15) introduites dans celle-ci et les parois latérales étant adjacentes au côté sortie (12) des sections de plis (3, 4).

7. Cartouche filtrante selon l'une des revendications 1 à 6, **caractérisée en ce que** l'espace pur (5) est entouré par le milieu filtrant de l'élément filtrant (2).

8. Cartouche filtrante selon l'une des revendications 1 à 7, **caractérisée en ce que** l'élément filtrant (2) présente une section transversale de base circulaire ou partiellement circulaire.
